# EUROPEAN PATENT SPECIFICATION

(11) **EP 4 304 000 B1**
(45) Date of publication and mention of the grant of the patent: **09.09.2026**
(21) Application number: 22828610.0
(22) Date of filing: 13.05.2022
(51) Int. Cl.: H01M 50/595, H01M 50/586, H01M 50/531

(54) **ELECTRODE TAB PROTECTION TAPE AND SECONDARY BATTERY INCLUDING THE SAME**
SCHUTZBAND FÜR ELEKTRODENLASCHEN UND SEKUNDÄRBATTERIE DAMIT
RUBAN DE PROTECTION DE LANGUETTE D'ÉLECTRODE ET BATTERIE SECONDAIRE LE COMPRENANT

(30) Priority: 24.06.2021 KR 20210082711
(43) Date of publication of application: 10.01.2024
(73) Proprietor: LG ENERGY SOLUTION, LTD., Seoul 07335 (KR)
(72) Inventor: LEE, Ji Sun, Daejeon 34122 (KR); AN, Mi Ae, Daejeon 34122 (KR); OH, Jung Shik, Daejeon 34122 (KR)
(74) Representative: Plasseraud IP
(86) International application number: PCT/KR2022/006908
(87) International publication number: WO 2022/270761

(56) References cited:
- WO-A1-2016/140244
- JP-A- 2001 126 678
- JP-A- 2017 216 160
- KR-A- 20030 095 266
- KR-A- 20030 095 519
- KR-A- 20070 006 255
- KR-A- 20190 060 244

## Description

### TECHNICAL FIELD

### CROSS-REFERENCE TO RELATED APPLICATION

The present application claims the benefit of the priority of Korean Patent Application No. 10-2021-0082711, filed on June 24, 2021.

### TECHNICAL FIELD

The present invention relates to an electrode tab protection tape and a secondary battery including the same, and more particularly, to an electrode tab protection tape attached to an electrode tab manufactured by applying a thin film material to prevent disconnection due to cracks of the electrode tab from occurring and allow current to continuously flow so as to prevent operation failure of the secondary battery from occurring, and a secondary battery including the same.

### BACKGROUND ART

A secondary battery refers to a battery that is chargeable and dischargeable, unlike a primary battery that is not charged, and examples of the secondary battery may include a nickel cadmium battery, a nickel hydrogen battery, a lithium ion battery, and a lithium ion polymer battery. Such a secondary battery is being applied to be used in small-sized products such as digital cameras, notebooks, mobile phones, PDAs, E-bikes, and the like as well as large-sized products requiring high power such as electric vehicles and hybrid vehicles, power storage devices for storing surplus power or renewable energy, and backup power storage devices. Patent documents WO2016/140244, JP 2017 216160A and KR 2003 0095519 provide examples of secondary batteries.

Such a secondary battery is classified into a pouch-type secondary battery and a can type secondary battery according to a material of a battery case accommodating an electrode assembly. In the pouch-type secondary battery, the electrode assembly is accommodated in a pouch made of a flexible polymer material having a variable shape. In addition, in the can type secondary battery, an electrode assembly is accommodated in a case made of a metal or plastic material having a predetermined shape.

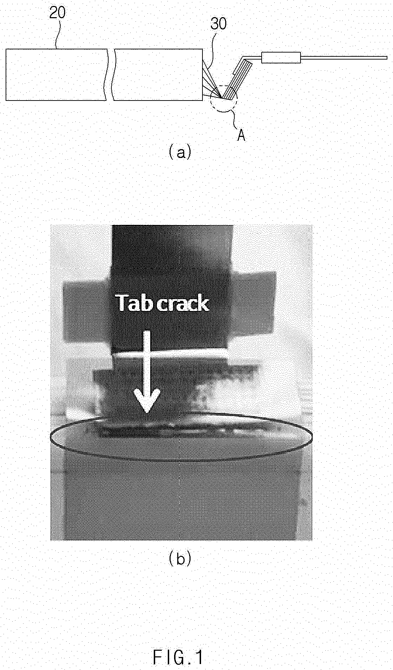

FIG. 1(a) illustrates a side surface of a general secondary battery according to the related art, except that a battery case is omitted. Referring to FIG. 1, a structure of the general secondary battery includes an electrode assembly 20 having a structure in which electrodes (a negative electrode and a positive electrode) and a separator are alternately stacked, a plurality of electrode tabs (a negative electrode tab and a positive electrode tab) extending from the electrode assembly 20, and electrode leads (a negative electrode lead and a positive electrode lead) respectively coupled to the plurality of electrode tabs 30.

That is, the electrode assembly 20 is a power generating element in which a positive electrode plate and a negative electrode plate are sequentially stacked with the separator interposed therebetween. Here, the plurality of positive electrode tabs extend from the plurality of positive electrode plates, and the plurality of negative electrode tabs extend from the plurality of negative electrode plates. The electrode assembly 20 is accommodated in a battery case (not shown), which is a pouch-type exterior, and an electrolyte is injected therein.

The plurality of electrode tabs 30 are welded to the electrode lead by an ultrasonic welding device, and then, the plurality of electrode tabs 30 welded to the electrode lead are bent in an approximately V shape. Here, the bent part A is also referred to as a V-forming part. However, due to the thinning of the electrode tab 30, cracks or breakage of the electrode tab 30 may occur frequently at the bent part A, which is illustrated in FIG. 1(b).

FIG. 1(b) is a bottom view illustrating the bent part A of FIG. 1(a) as viewed from below and illustrates a state in which cracks occur in the bent part A of the electrode tab 30.

As described above, when the cracks occur in the electrode tab 30, the current does not flow smoothly, and consequently, disconnection of the secondary battery and deterioration in quality of the secondary battery occur. Therefore, there is a need to develop a product for solving the above-mentioned problems.

### DISCLOSURE OF THE INVENTION

### TECHNICAL PROBLEM

The present invention has been devised to solve the above problems, and an object of the present invention is to provide an electrode tab protection tape attached to an electrode tab manufactured by applying a thin film material to prevent disconnection due to cracks of the electrode tab from occurring and allow current to continuously flow so as to prevent operation failure of the secondary battery from occurring, and a secondary battery including the same.

### TECHNICAL SOLUTION

A secondary battery according to the present invention includes: an electrode assembly in which electrodes and separators are stacked; an electrode tab drawn out from each of the electrodes; and an electrode tab protection tape attached to the electrode tab, wherein the electrode tab protection tape includes: an adhesion layer including an adhesive and a conductive material; and an insulating layer provided on one surface of the adhesion layer.

The insulation layer may have an area greater than that of the adhesion layer.

In the electrode tab protection tape, the other surface of the adhesion layer may be attached to the electrode tab.

The electrode tab may include a bent part that is bent in a V shape along a longitudinal direction of the electrode tab to form a bent inner side and a bent outer side, and in the electrode tab protection tape, a surface to which the adhesion layer is exposed may be attached to surround the bent outer side of the bent part.

The electrode tab protection tape may be attached to surround one surface of the electrode assembly and the bent outer side of the bent part together.

The electrode tab may include a bent part that is bent in a V shape along a longitudinal direction of the electrode tab to form a bent inner side and a bent outer side, and in the electrode tab protection tape, a surface to which the adhesion layer is exposed may be attached to surround the bent inner side of the bent part.

The insulation layer may have an area greater than that of the adhesion layer.

The insulation layer may overlap to protrude along a circumference of the adhesion layer in a width direction.

The insulation layer may overlap to protrude along a circumference of the adhesion layer in a width direction and a longitudinal direction.

### ADVANTAGEOUS EFFECTS

The secondary battery according to the present invention comprises an electrode tab protection tape which includes the adhesion layer including the adhesive and the conductive material and the insulation layer provided on one surface of the adhesion layer and may be attached to the electrode tab manufactured by applying the thin film material to prevent the disconnection due to the cracks of the electrode tab from occurring and allow the current to flow continuously so as to prevent the secondary battery from being defective.

### BRIEF DESCRIPTION OF THE DRAWINGS

FIG. 1 is a side view of a secondary battery according to a related art and a bottom view illustrating a state in which cracks occur in an electrode tab of the secondary battery.
FIG. 2 is a cross-sectional view illustrating an electrode tab protection tape according to Embodiment 1 of the present invention.
FIG. 3 is a plan view illustrating the electrode tab protection tape according to Embodiment 1 of the present invention.
FIG. 4 is a perspective view illustrating a secondary battery according to Embodiment 2 of the present invention.
FIG. 5 is a view illustrating a state in which an electrode tab protection tape is attached to the secondary battery according to Embodiment 2 of the present invention.

### MODE FOR CARRYING OUT THE INVENTION

Hereinafter, preferred embodiments of the present invention will be described in detail with reference to the accompanying drawings so that those of ordinary skill in the art can easily carry out the present invention. However, the present invention may be implemented in several different forms and is not limited or restricted by the following examples.

### Embodiment 1

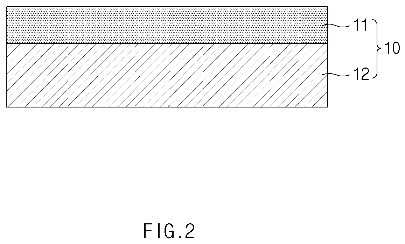

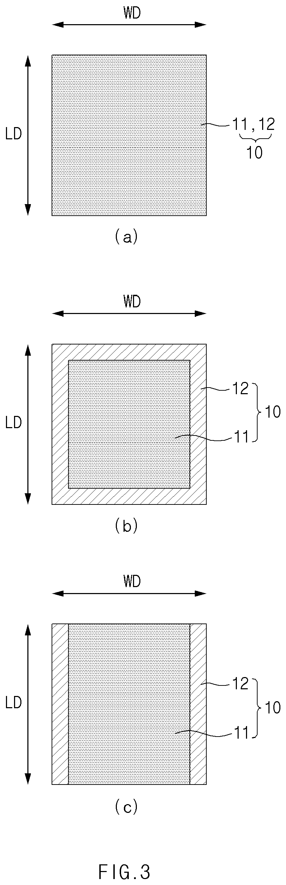

FIG. 2 is a cross-sectional view illustrating an electrode tab protection tape according to Embodiment 1 of the present invention. FIG. 3 is a plan view illustrating the electrode tab protection tape according to Embodiment 1 of the present invention.

Referring to FIG. 2, an electrode tab protection tape 10 according to Embodiment 1 of the present invention includes an adhesion layer 11 and an insulation layer 12. Hereinafter, a composition and structure of each of the adhesion layer 11 and the insulation layer 12 will be described in detail.

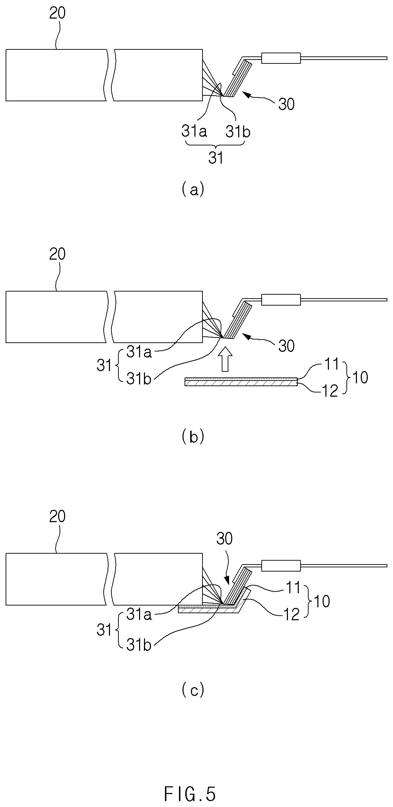

The adhesion layer 11 may be a layer having adhesion force so that the electrode tab protection tape 10 according to Embodiment 1 of the present invention adheres to the other object. Here, the other object may include an electrode assembly, an electrode lead, and the like. As described below in Embodiment 1, the adhesion layer 11 may adhere to an electrode tab 30 and an electrode assembly 20 at the same time (see FIG. 5).

The adhesion layer 11 of the electrode tab protection tape 10 according to Embodiment 1 of the present invention includes an adhesive to have adhesive force, and simultaneously includes a conductive material. That is, the adhesive and the conductive material may be mixed to form the adhesion layer 11. Thus, the adhesion layer 11 may be attached to the electrode tab 30, and even if cracks occur in the electrode tab 30, current may flow through the adhesion layer 11 to prevent disconnection from occurring. Here, the conductive material may refer to a material that conducts electricity, but the present invention is not limited to a specific conductive material. For example, the conductive material may be a material commonly used in the art, i.e., may include a material that is mixed with the adhesive and provided on an insulation layer 12 to provide conductivity and adhesiveness.

The insulation layer 12 may be provided on one surface of the adhesion layer 11 to insulate the electrode tab. As described above, the insulation layer 12 may be selected as a material that is capable of preventing short circuit from occurring by performing an insulating function. For example, in Embodiment 1 of the present invention, the insulation layer 12 may include a casted polypropylene (CPP) resin that is a casted polypropylene-based resin by using polypropylene as a main material. However, it is not necessarily limited to the casted polypropylene and may be selected from Teflon, polyimide, and the like, which have chemical resistance while performing the insulating function.

As described above, the electrode tab protection tape 10 according to the present invention may include the adhesion layer 11 including the adhesive and the conductive material and the insulation layer 12 provided on one surface of the adhesion layer and may be attached to the electrode tab manufactured by applying the thin film material to prevent the disconnection due to the cracks of the electrode tab from occurring and allow the current to flow continuously so as to prevent the secondary battery from being defective.

Next, referring to FIG. 3, a structures of each of the adhesion layer 11 and the insulation layer 12 will be described. FIG. 3 is a plan view illustrating the electrode tab protection tape 10. In detail, FIG. 3(a) is a plan view illustrating a case in which the adhesion layer 11 and the insulation layer 12 have the same area, and FIG. 3(b) and 3(c) are views a case in which the adhesion layer 11 has an area less than that of the insulation layer 12.

Referring to FIG. 3(a), the adhesion layer 11 may be provided to overlap one surface of the insulation layer 12 so as to have the same area as the insulation layer 12. That is, when the adhesion layer 11 containing both the adhesive and the conductive material is provided to have the same area as the insulation layer 12, the adhesion layer 11 and the insulation layer 12 may overlap exactly each other. As a result, in the plan view illustrated in FIG. 3(a), only one of the adhesion layer 11 and the insulation layer 12 may be visible. As described above, when the adhesion layer 11 is provided to have the same area as the insulation layer 12, an area of the adhesion layer 11 to the insulation layer 12 may increase to improve the adhesion force compared to the electrode tab protection tape 10 of FIGS, 3(a) and 3(c) that will be described later, and a height difference between the adhesion layer 11 and the insulation layer 12 may not occur to prevent the electrode tab protection tape from being peeled off and also to cover the cracks on the wide area, thereby effectively preventing the disconnection from occurring.

Next, referring to FIG. 3(b), the adhesion layer 11 may have an area less than that of the insulation layer 12 and may be provided to overlap one surface of the insulation layer 12. In particular, the insulation layer 12 may overlap so as to protrude along a circumference of the adhesion layer 11 in a width direction WD.

The electrode tab protection tape 10 according to Embodiment 1 of the present invention is manufactured and transferred in a roll shape by rolling the adhesion layer 11, which is continuously provided, after the insulation layer 12 protrudes along the circumference of the adhesion layer 11 in the width direction WD on one surface of the insulating layer 12, which is continued in a longitudinal direction LD and has a predetermined length. Then, the electrode tab protection tape 10 may be mounted again on a device and used by being cut into a required length while unwinding. Alternatively, only the insulation layer 12 may be wound to be manufactured and transferred in the roll shape, and then the adhesion layer 11 may be continuously provided while unwinding and be cut by the required length so as to be used.

Here, the electrode tab protection tape 10 having the form illustrated in FIG. 3(b) may be manufactured by continuously providing the adhesion layer 11 on one surface of the insulation layer 12 and cutting the adhesion layer 11, and thus, the electrode tab protection tape 10 may be excellent in manufacture and workability to reduce manufacturing costs. In addition, when the electrode tab protection tape adheres to the electrode tab 30 and the like, since the insulation layer 12 surrounds the adhesion layer 11 including the conductive material in the width direction WD, an excellent insulating effect may be expected compared to the electrode tab protection tape 10 illustrated in FIG. 3(a).

Referring to FIG. 3(c), the adhesion layer 11 may have an area less than that of the insulation layer 12, and the insulation layer 12 may overlap to protrude along a circumference of the adhesion layer 11 in the width direction WD and the longitudinal direction LD. That is, when viewed in the plan view, the insulation layer 12 may be formed to completely surround the adhesion layer 11. In this case, while effectively preventing the disconnection due to the cracks in the electrode tab, the excellent insulating effect may be expected compared to the electrode tab protection tape 10 having the form illustrated in FIG. 3(b).

### Embodiment 2

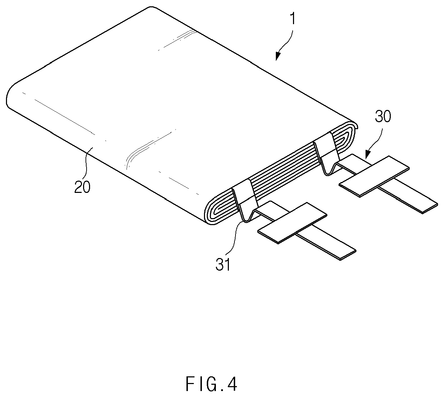

FIG. 4 is a perspective view illustrating a secondary battery according to Embodiment 2 of the present invention. FIG. 5 is a view illustrating a state in which an electrode tab protection tape is attached to the secondary battery according to Embodiment 2 of the present invention.

Embodiment 2 of the present invention is different from Embodiment 1 in that a secondary battery including the electrode tab protection tape according to Embodiment 1 is provided.

The contents that are duplicated with Embodiment 1 will be omitted as much as possible, and Embodiment 2 will be described with a focus on the differences. That is, it is obvious that the contents that are not described in Embodiment 2 may be regarded as the contents of Embodiment 1 if necessary.

Referring to FIGS. 4 and 5, a secondary battery 1 according to Embodiment 2 of the present invention includes an electrode assembly 20, an electrode tab 30, and an electrode tab protection tape 10. In addition, the secondary battery may include a battery case, an electrolyte, and the like, but this structure is not separately illustrated in FIGS. 4 and 5 to be described later.

In the electrode assembly 20, electrodes and separators are stacked, in particular, a positive electrode, a separator, a negative electrode, and a separator are stacked. Here, the electrode assembly 20 may be selected from various types such as a jelly-roll type formed by winding a long sheet, a stack type, in which unit cells cut to a predetermined size are stacked, and a stack/folding type in which unit cells are stacked, and a separator is folded.

An electrode tab 30 is drawn out from the electrode. Here, a positive electrode tab is drawn out from a positive electrode, and a negative electrode tab is drawn out from a negative electrode. The electrode tab 30 may be drawn out by cutting the electrode or may be drawn out by being separately bonded to the electrode.

The secondary battery 1 according to Embodiment 2 of the present invention includes an electrode tab protection tape 10 attached to the electrode tab 30, and the electrode tab protection tape 10 includes an adhesion layer 11 including an adhesive and a conductive material and an insulation layer 12 provided on one surface of the adhesion layer 11. In addition, the insulation layer 12 may include a material selected from any one of a casted polypropylene (CPP) resin, Teflon, and polyimide, but is not necessarily limited thereto, and various materials having chemical resistance may be selected. Also, the insulation layer 12 may have an area greater than that of the adhesion layer 11. In addition, it is understood that a configuration and effect related to the electrode tab protection tape 10 are the same as that described in Embodiment 1.

In the electrode tab protection tape 10, the insulation layer 12 may be provided on one surface of the adhesion layer 11, and the electrode tab 30 may be attached to the other surface of the adhesion layer 11. Hereinafter, a position and method in which the electrode tab protection tape 10 is attached to the secondary battery 1 will be described in detail with reference to FIG. 5.

First, the electrode assembly 20 and the electrode tab 30 are illustrated in FIG. 5(a). The electrode tab 30 may include a bent part 31 that is bent in a V-shape along a longitudinal direction of the electrode tab 30 to form a bent inner side 31a and a bent outer side 31b.

Referring to FIGS. 5(b) and 5(c), in the electrode tab protection tape 10 according to Embodiment 2 of the present invention, a surface to which the adhesion layer 11 is exposed may be attached to the bent outer side 31b of the bent part 31. That is, the insulation layer 12 may be provided on one surface of the adhesion layer 11, and the adhesion layer 11 may be exposed through the other surface of the adhesion layer 11, on which the insulation layer 12 is not provided. The other surface of the adhesion layer 11 may be attached to surround the bent outer side 31b of the bent part 31 of the electrode tab 30. Thus, even when cracks occur at the bent outer side 31b, which is vulnerable to cracks and ruptures, current may pass through the adhesion layer 11 including a conductive material without causing disconnection.

In addition, the electrode tab protection tape 10 may be attached to surround one surface of the electrode assembly 20 and the bent outer side 31b of the bent part 31 together. One surface of the electrode assembly 20 may mean a surface on which a normal direction corresponds to a direction of the bent outer side 31b among several surfaces formed on the electrode assembly 20. As described above, when the electrode tab protection tape 10 is attached to the electrode tab 30 and one surface of the electrode assembly 20 together, adhesive force and supporting force may be additionally secured.

The electrode tab protection tape 10 may be attached so that the surface on which the adhesion layer 11 is exposed surrounds the bent inner side 31a of the bent part 31. That is, there is sufficient possibility that the cracks occur not only at the bent outer side 31b of the bent part 31 of the electrode tab 30, but also the bent inner side 31a of the bent part 31, and thus, the electrode tab protection tape 10 may be attached to the bent inner side 31a to effectively prevent the disconnection of the secondary battery from occurring. Alternatively, the electrode tab protection tape 10 may be attached to the bent inner side 31a and the bent outer side 31b at the same time.

### [Description of the Symbols]

1: Secondary battery
10: Electrode tab protection tape
11: Adhesion layer
12: Insulation layer
20: Electrode assembly
30: Electrode tab
31: Bent part
31a: Bent inner side
31b: Bent outer side
WD: Width direction of electrode tab protection tape
LD: Longitudinal direction of electrode tab protection tape

## Claims

1. A secondary battery (1) comprising:
an electrode assembly (20) in which electrodes and separators are stacked;
an electrode tab (30) drawn out from each of the electrodes; and
an electrode tab protection tape (10) attached to the electrode tab,
wherein the electrode tab protection tape (10) comprises:
an adhesion layer (11) comprising an adhesive and a conductive material; and
an insulating layer provided on one surface of the adhesion layer (11).

2. The secondary battery (1) of claim 1, wherein the insulation layer has an area greater than that of the adhesion layer (11).

3. The secondary battery (1) of claim 1, wherein, in the electrode tab protection tape (10), the other surface of the adhesion layer (11) is attached to the electrode tab (30).

4. The secondary battery (1) of claim 3, wherein the electrode tab (30) comprises a bent part (31) that is bent in a V shape along a longitudinal direction of the electrode tab (30) to form a bent inner side (31a) and a bent outer side (31b), and
in the electrode tab protection tape (10), a surface to which the adhesion layer (11) is exposed is attached to surround the bent outer side (31b) of the bent part (31).

5. The secondary battery (1) of claim 4, wherein the electrode tab protection tape (10) is attached to surround one surface of the electrode assembly (20) and the bent outer side (31b) of the bent part (31) together.

6. The secondary battery (1) of claim 3, wherein the electrode tab (30) comprises a bent part (31) that is bent in a V shape along a longitudinal direction of the electrode tab (30) to form a bent inner side (31a) and a bent outer side (31b), and
in the electrode tab protection tape (10), a surface to which the adhesion layer (11) is exposed is attached to surround the bent inner side (31a) of the bent part (31).

7. The secondary battery (1) of claim 2, wherein the insulation layer (12) overlaps to protrude along a circumference of the adhesion layer (11) in a width direction.

8. The secondary battery (1) of claim 2, wherein the insulation layer (12) overlaps to protrude along a circumference of the adhesion layer (11) in a width direction and a longitudinal direction.

## Patentansprüche

1. Sekundärbatterie (1), umfassend:
eine Elektrodenanordnung (20), in der Elektroden und Separatoren gestapelt sind;
eine Elektrodenlasche (30), die aus jeder der Elektroden herausgezogen ist; und
ein Elektrodenlaschen-Schutzband (10), das an der Elektrodenlasche angebracht ist,
wobei das Elektrodenlaschen-Schutzband (10) umfasst:
eine Haftschicht (11), die einen Klebstoff und ein leitfähiges Material umfasst; und
eine Isolierschicht, die auf einer Oberfläche der Haftschicht (11) bereitgestellt ist.

2. Sekundärbatterie (1) nach Anspruch 1, wobei die Isolierschicht eine Fläche aufweist, die größer als die der Haftschicht (11) ist.

3. Sekundärbatterie (1) nach Anspruch 1, wobei in dem Elektrodenlaschen-Schutzband (10) die andere Oberfläche der Haftschicht (11) an der Elektrodenlasche (30) angebracht ist.

4. Sekundärbatterie (1) nach Anspruch 3, wobei die Elektrodenlasche (30) einen gebogenen Teil (31) umfasst, der entlang einer Längsrichtung der Elektrodenlasche (30) in einer V-Form gebogen ist, um eine gebogene Innenseite (31a) und eine gebogene Außenseite (31b) zu bilden, und
in dem Elektrodenlaschen-Schutzband (10) eine Oberfläche, welcher die Haftschicht (11) ausgesetzt ist, angebracht ist, um die gebogene Außenseite (31b) des gebogenen Teils (31) zu umgeben.

5. Sekundärbatterie (1) nach Anspruch 4, wobei das Elektrodenlaschen-Schutzband (10) angebracht ist, um eine Oberfläche der Elektrodenanordnung (20) und die gebogene Außenseite (31b) des gebogenen Teils (31) gemeinsam zu umgeben.

6. Sekundärbatterie (1) nach Anspruch 3, wobei die Elektrodenlasche (30) einen gebogenen Teil (31) umfasst, der entlang einer Längsrichtung der Elektrodenlasche (30) in einer V-Form gebogen ist, um eine gebogene Innenseite (31a) und eine gebogene Außenseite (31b) zu bilden, und
in dem Elektrodenlaschen-Schutzband (10) eine Oberfläche, welcher die Haftschicht (11) ausgesetzt ist, angebracht ist, um die gebogene Innenseite (31a) des gebogenen Teils (31) zu umgeben.

7. Sekundärbatterie (1) nach Anspruch 2, wobei die Isolierschicht (12) überlappt, um entlang eines Umfangs der Haftschicht (11) in einer Breitenrichtung hervorzustehen.

8. Sekundärbatterie (1) nach Anspruch 2, wobei die Isolierschicht (12) überlappt, um entlang eines Umfangs der Haftschicht (11) in einer Breitenrichtung und einer Längsrichtung hervorzustehen.

## Revendications

1. Une batterie secondaire (1) comprenant :
un ensemble d'électrodes (20) dans lequel des électrodes et des séparateurs sont empilés ;
une languette d'électrode (30) tirée de chacune des électrodes ; et
un ruban de protection de languette d'électrode (10) fixé à la languette d'électrode,
dans laquelle le ruban de protection de languette d'électrode (10) comprend :
une couche d'adhérence (11) comprenant un adhésif et un matériau conducteur ; et
une couche isolante disposée sur une surface de la couche d'adhérence (11).

2. La batterie secondaire (1) selon la revendication 1, dans laquelle la couche isolante a une surface supérieure à celle de la couche d'adhérence (11).

3. La batterie secondaire (1) selon la revendication 1, dans laquelle, dans le ruban de protection de languette d'électrode (10), l'autre surface de la couche d'adhérence (11) est fixée à la languette d'électrode (30).

4. La batterie secondaire (1) selon la revendication 3, dans laquelle la languette d'électrode (30) comprend une partie pliée (31) qui est pliée en forme de V le long d'une direction longitudinale de la languette d'électrode (30) pour former un côté intérieur plié (31a) et un côté extérieur plié (31b), et
dans le ruban de protection de languette d'électrode (10), une surface sur laquelle la couche d'adhérence (11) est exposée est fixée pour entourer le côté extérieur plié (31b) de la partie pliée (31).

5. La batterie secondaire (1) selon la revendication 4, dans laquelle le ruban de protection de languette d'électrode (10) est fixé pour entourer ensemble une surface de l'ensemble d'électrodes (20) et le côté extérieur plié (31b) de la partie pliée (31).

6. La batterie secondaire (1) selon la revendication 3, dans laquelle la languette d'électrode (30) comprend une partie pliée (31) qui est pliée en forme de V le long d'une direction longitudinale de la languette d'électrode (30) pour former un côté intérieur plié (31a) et un côté extérieur plié (31b), et
dans le ruban de protection de languette d'électrode (10), une surface sur laquelle la couche d'adhérence (11) est exposée est fixée pour entourer le côté intérieur plié (31a) de la partie pliée (31).

7. La batterie secondaire (1) selon la revendication 2, dans laquelle la couche isolante (12) se superpose de façon à faire saillie le long d'une circonférence de la couche d'adhérence (11) dans une direction de la largeur.

8. La batterie secondaire (1) selon la revendication 2, dans laquelle la couche isolante (12) se superpose de façon à faire saillie le long d'une circonférence de la couche d'adhérence (11) dans une direction de la largeur et une direction longitudinale.
